# EUROPÄISCHE PATENTSCHRIFT

(11) **EP 3 526 371 B1**
(45) Veröffentlichungstag und Bekanntmachung des Hinweises auf die Patenterteilung: **17.02.2021**
(21) Anmeldenummer: 17790949.6
(22) Anmeldetag: 05.10.2017
(51) Int. Cl.: C25B 1/00, C25B 11/04, C25B 11/03, C25B 1/04, C25B 9/18

(54) **PHOTOVOLTAIK-ELEKTROLYSE-EINHEIT**
PHOTOVOLTAIC-ELECTROLYSIS UNIT
UNITÉ PHOTOVOLTAIQUE-ÉLECTROLYZE

(30) Priorität: 13.10.2016 DE 102016119503
(43) Veröffentlichungstag der Anmeldung: 21.08.2019
(73) Patentinhaber: Helmholtz-Zentrum Berlin für Materialien und Energie GmbH, 14109 Berlin (DE)
(72) Erfinder: KIRNER, Simon, Oxford OX1 4PA (GB); SCHLATMANN, Rutger, 14195 Berlin (DE); BOROWSKI, Patrick, 46236 Bottrop (DE); MALJUSCH, Artjom, 44866 Bochum (DE); ELKEMANN, Ines, 48653 Coesfeld (DE); HOCH, Sascha, 44797 Bochum (DE)
(86) Internationale Anmeldenummer: PCT/DE2017/100846
(87) Internationale Veröffentlichungsnummer: WO 2018/068788

(56) Entgegenhaltungen:
- JP-A- 2013 105 632
- US-A1- 2008 223 439

## Beschreibung

### Technisches Gebiet

Die Erfindung betrifft eine Photovoltaik-Elektrolyse-Einheit, wie sie beispielsweise zur Herstellung von Wasserstoff und Sauerstoff durch Spaltung von Wasser mit Hilfe von Sonnenenergie verwendet wird.

### Stand der Technik

Photovoltaik- Elektrolyse-Einheiten (PE-Einheiten) sind aus dem Stand der Technik bekannt, etwa aus WO 2013/143885 A1. Sie dienen zur elektrochemischen Umsetzung von einem Edukt, z.B. Wasser, in zwei Produkte, z.B. in Sauerstoff und Wasserstoff. Die dafür benötigte elektrische Energie wird dabei von photovoltaischen Modulen, welche die Energie der Sonnenstrahlung (Sonnenergie) in elektrische Energie (Strom) umwandelt, geliefert. Die elektrochemische Umsetzung von durch Sonnenenergie erzeugter elektrischer Energie in Produkte, insbesondere Wasserstoff ermöglicht insbesondere auch eine chemische Speicherung der durch die Sonnenenergie erzeugten elektrischen Energie.

Spezielle Ausführungen von PE-Einheiten beinhalten mehrere sogenannte integrierte Photovoltaik- Elektrolyseurmodule (integrierte PV-EC-Module), in denen photovoltaische Module mit Elektrolyseurzellen verbunden sind. Das photovoltaische Modul und die Elektroyseurzelle können dabei, zumindest teilweise mittels Kabeln verbunden sein oder aber komplett kabellos ausgeführt werden. Letztere Ausführung hat neben dem geringeren Materialaufwand den Vorteil, dass beide Module thermisch eng gekoppelt werden können. Dies ermöglicht, dass die, durch die Beleuchtung im Betrieb entstehende und für die Effizienz der photovoltaischen Energiewandlung hinderliche, jedoch für die Effizienz der elektrochemischen Energiewandlung zuträgliche Wärme genutzt werden kann.

Die Elektrolyseurzellen der PV-EC-Module weisen dabei im Allgemeinen jeweils mindestens einen Elektrolyten, einen Separator, ein Gehäuse und zwei Elektroden auf. Der Separator ist ionenleitend und kann dabei zum Beispiel eine semipermeable Membran oder ein Diaphragma (getränkt mit einem flüssigen Elektrolyten) sein. Die Separatoren trennen die Elektrolyseurzellen in zwei Kammern, mit unterschiedlich gepolten Elektroden, an denen jeweils komplementäre Halb-Reaktionen (Reduktion, z.B. Bildung von Wasserstoff und Oxidation, z.B. Bildung von Sauerstoff) in den Elektrolyten im Kontakt mit den Elektroden, vermittels der Katalysatormaterialien stattfinden. Die Polung der Elektroden wird durch deren Kontaktierung mit Polen des photovoltaischen Moduls bestimmt. Alle Kammern sind im Allgemeinen mit Öffnungen für die Zufuhr und den Abfluss von Elektrolyten sowie entstehender Gase versehen. Die Elektrolyten sind, im Falle dass Wasserstoff produziert wird, wässrige Lösungen welche entweder basische z.B. KOH, NaOH oder Ca(OH)₂ (pH-Wert von 7 bis zu 14) oder saure Bestandteile z.B. H₂SO₄, Na₂SO₄ oder HClO₄, pH-Wert zwischen 0 und 7, insbesondere mit einem pH-Wert zwischen 0.7 und 6.9, und dabei insbesondere eine 0.8 M bis 1.2 M H₂SO₄ bzw. vorzugsweise 1 M H₂SO₄ wässrige Lösung. Pufferlösungen mit einem pH-Wert zwischen 7 und 9, insbesondere eine 0,01 M bis 1 M KHCO₃ Lösung sind ebenfalls einsetzbar. Außer der Produktion von Wasserstoff durch Wasserspaltung ist auch eine photoelektrochemische Reduktion von in dem wässrigen Elektrolyt gelöstem CO₂ möglich. Die Ausgangsspannung des photovoltaischen Moduls muss in diesem Fall durch Anpassung des Solarzelldesigns bzw. der Anzahl der Solarzellen, die in Serie geschaltet werden, geändert werden, um die benötigte Überspannung zu erzielen.

Die Elektroden sind insbesondere sogenannte passive oder Dunkel-Elektroden, die mit Katalysatoren für die entsprechenden Oxidations- bzw. Reduktionsreaktionen beschichtet sind, oder aus diesen bestehen. Alternativ kann auch eine Photoelektrode mit einem Photokatalysator zum Einsatz kommen.

Die photovoltaischen Module der PV-EC-Module müssen eine für die Reaktion genügende Ausgangsspannung aufweisen. Bei der WasserElektrolyse entspricht diese theoretisch mindestens dem thermodynamischen Potential von Wasser, *µₜₕ* = 1.23 eV, und einer zusätzlichen Spannung (Überspannung), die hauptsächlich von den eingesetzten Katalysatoren und Transport- bzw. ohmschen Verlusten im System bestimmt wird. Die photovoltaischen Module können modular aus mehreren Solarzellen aufgebaut sein oder aber auch aus einer Einzelzelle (z.B. einer Stapelsolarzelle) bestehen, wenn diese die für die Reaktion nötige Ausgangspannung hat. Für das Bereitstellen der nötigen Ausgangsspannungen können Stapelsolarzellen mit mehreren Absorberschichten und entsprechend unterschiedlichen Bandlücken eingesetzt werden. Ein Pluspol (auch als Photoanode oder Lochkontakt bezeichnet) und ein Minuspol (auch als Photokathode oder Elektronenkontakt bezeichnet) des photovoltaischen Moduls, die dabei nicht notwendiger Weise von einer Solarzelle stammen müssen, sind dabei mit den Elektroden der Elektrolyseurzelle elektrisch kontaktiert. Mehrere Solarzellen in einem photovoltaischen Modul sind üblicherweise in Serie verschaltet, um die nötige Ausgangsspannung für ein photovoltaisches Modul zu erreichen.

Gängige Photovoltaikmodule basieren zumeist auf einer der vier verschiedenen Materialklassen: (1) Si-Wafer- sowie (2) Dünnschicht-Si-, (3) Dünnschicht-CuGaₓIn(₁₋ₓ)Se₂- (CIGS) und (4) Dünnschicht-Cadmiumtellurid-(CdTe) basierte Photovoltaikmodule.

Alle photovoltaischen Module weisen Substrate auf und werden dabei zumeist durch ein transparentes Substrat, insbesondere aus Glas, beleuchtet, welches gleichzeitig als mechanischer Schutz dient. Bei Silizium-Wafer basierten photovoltaischen Modulen wird unterschieden zwischen Glas-Glas- und Glas-Folie-Modulen, letztere haben anstelle des Glases eine Folie auf der Rückseite. Dünnschicht-Si- sowie -CdTe-Module werden meist in der sogenannten "Superstrat" -Konfiguration (d.h. die Solarzelle wird direkt auf dem Glassubstrat abgeschieden und durch das Substrat beleuchtet) ausgeführt. Bei diesen Modultypen ist es fertigungstechnisch einfach Elektronen- und Lochkontakt auf der Rückseite mit geringem Abstand anzuordnen. Sogenannte CIGS-Module werden hingegen üblicherweise in der "Substrat" - Konfiguration hergestellt (d.h. die Solarzelle wird nicht durch das Glassubstrat beleuchtet, auf dem sie abgeschieden wurde). Als Frontelektroden werden bei Dünnschichtmodulen transparente, elektrisch leitfähige Schichten (Transparent Conducting Oxide, TCO) eingesetzt.

Im Falle von Si-Wafer basierten Modulen werden auf Grund der höheren Stromdichten Metallkontakte (auch Metallfinger und Busbars genannt) eingesetzt. Die Größe der Module ist definiert durch die Größe der eingesetzten Si-Wafer. Fertigungstechnisch durchgesetzt haben sich quadratische oder pseudoquadratische (mit abgerundeten Ecken) Wafer mit Kantenlängen von 125 mm oder 156 mm, wobei auch Halb- oder Viertelwaferzellen oder andere Größen möglich sind. Die Verschaltung von mehreren Zellen im Modul wird bei Si-Wafer-basierten Modulen durch metallene Zellverbinder vorgenommen, die auf die Finger bzw. Busbars angebracht werden und den Elektronen- der einen mit dem Lochkontakt der benachbarten Zelle verbinden. In den meisten erhältlichen Si-Wafer-basierten Modulen werden die Solarzellen immer durch den gleichen Kontaktbereich beleuchtet (entweder nur durch den Elektronen- oder nur durch den Lochkontakt). Für die Serienverschaltung müssen die Zellverbinder also Front- und Rückkontakt verbinden, wobei Verluste der aktiven Fläche entstehen.

Beispiele für integrierte PV-EC Module finden sich in der US 2008/0223439 A1 und der US 2008/0073205 A1.

In dem Aufsatz 1 von B. Turan et al. (From leaf to tree: upscaling of artificial photosynthesis, arXiv:1604.03074, 2016, s. 1-33) und in dem Aufsatz 2 von M.T. Winkler et al. (Modeling integrated photovoltaic-electrochemical devices using steady-state equivalent circuits, Proceedings of the National Academy of Sciences of the United States of America, Vol 110(12), 2013, S. E1076 - E1082) sind verschiedene Anordnungen der einzelnen Bauteile von PV-EC-Modulen vorgestellt und werden diskutiert.

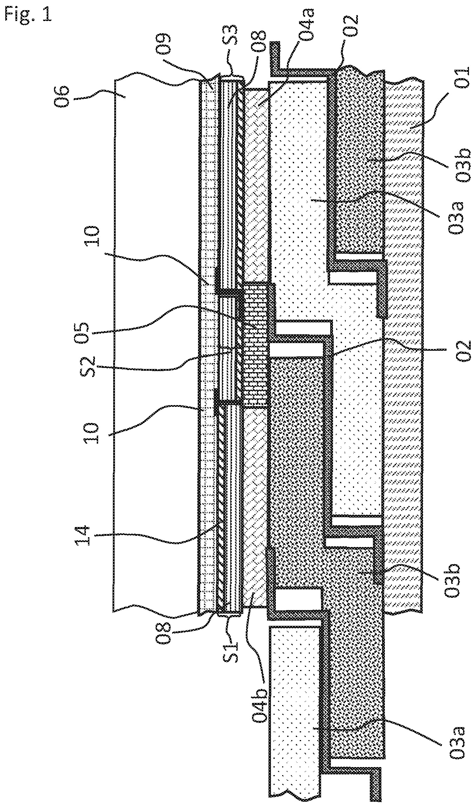

In einem ersten Anordnungsmodus, sind die Elektroden der Elektrolyseurzelle auf der Rückseite (d.h. der der Sonne abgewandten Seite) des photovoltaischen Moduls bzw. der Solarzelle mit einem Abstand nebeneinander angeordnet. Diese Ausführung hat den Vorteil, dass die ohmschen Verluste in den Solarzellen verringert werden können, weil die Distanzen zwischen den beiden Solarzellkontakten klein sind gegenüber anderen Ausführungen. Hierfür eignen sich vor allem die oben beschriebenen photovoltaischen Module in der sogenannten Superstrat Ausführung, mit Dünnschicht-Si oder -CdTe Solarzellen, da in diesen, wie beschrieben der Abstand zwischen den Polen der Solarzellen im Modul auch ohne den Einsatz weiterer Leitungselemente gering (z.B. <1 mm) sein kann. Der Nachteil dieser Anordnung liegt darin, dass der Abstand zwischen den Elektroden aus Montagegründen bei Verwendung eines Separators (z.B. einer Membran) nicht minimal sein kann und dadurch der Transportweg für die Ionen verhältnismäßig weit ist (Strecke im Elektrolyten + Separator). Diese Variante ist im Aufsatz 1, Typ II und Typ III (Fig. 1), beschrieben. Ein Beispiel für ein entsprechendes PV-EC-Modul, mit einer Anordnung der Elektroden und Solarzellen entsprechend dem ersten Anordnungsmodus ist in der US 2008/0223439 A1 gegeben.

In einem zweiten Anordnungsmodus, sind die Elektroden der Elektrolyseurzelle parallel zur Fläche des photovoltaischen Moduls angeordnet. In dieser Variante kann der Abstand zwischen den Elektroden, gegenüber der ersten Anordnung, verkleinert oder ganz vermieden werden in dem diese von beiden Seiten gegen den Separator gepresst werden und dadurch ein kleinstmöglicher Transportweg für die Ionen gebildet wird. Die vom photovoltaischen Modul aus gesehene hintere Elektrode muss mit einem Kabel oder einem anderen Leitungselement an der vorderen Elektrode vorbei mit dem einen Pol (Kontakt), die vordere Elektrode kann direkt mit dem anderen Pol des photovoltaischen Moduls verbunden werden. Hierbei muss ein Kompromiss eingegangen werden zwischen einer großen aktiven Fläche des photovoltaischen Moduls und der Elektrodenfläche und einer geringen Anzahl von Verbindungs-/Leitungselementen auf der einen Seite. Dies birgt den Nachteil, dass die Stromdichte hoch und die Distanzen für die Elektronen und dadurch bedingt die ohmschen Verluste in der PE-Einheit groß sind gegenüber der ersten Variante. Die alternative Verschaltung mehrerer kleinerer Module, zur Verringerung der ohmschen Verluste, bedeutet hingegen einen erhöhten Fertigungs- und Materialaufwand, auf Grund der höheren Anzahl an Verbindungs-/Leitungselementen. Diese Variante ist im Aufsatz 2 (Fig. 1B) beschrieben. Ein Beispiel für diesen Anordnungsmodus ist in der JP 2013-105632 A gegeben.

### Aufgabenstellung

Die Aufgabe der vorliegenden Erfindung ist es, eine Photovoltaik- Elektrolyse-Einheit anzugeben, in der ohmsche Verluste minimiert, d.h. Verluste durch Transportwege von Ionen und Elektronen kleinstmöglich sind und die ohne kosten- und montageintensive Verkabelung und Elektronik auskommt und die dabei beliebig und ohne großen fertigungstechnischen Aufwand erweiterbar (skalierbar) ist.

Die Aufgabe wird durch die Merkmale des Anspruchs 1 gelöst. Vorteilhafte Ausgestaltungen sind Gegenstand der Unteransprüche.

Die erfindungsgemäße Photovoltaik- Elektrolyse-Einheit (PE-Einheit) weist mindestens zwei integrierte Photovoltaik- Elektrolysemodule (PV-EC Module) und ein Gehäuse mit mindestens vier Öffnungen für den Durchtritt von Edukten und Produkten, insbesondere Elektrolyten und Gas bzw. einem Gas-Elektrolytgemisch auf. Die Anzahl der Öffnungen im Gehäuse ist bedingt durch die Anzahl von Kammern, z.B. für die Wasserstoff- und Sauerstoffproduktion. Jede Kammer hat mindestens einen Eingang für die Edukte (z.B. KOH in H₂O bei der Wasserelektrolyse oder CO₂ in H₂O oder in einem wässrigen Elektrolyt bei der CO₂ Reduktion) und einen Ausgang für die Produkte (z.B. ein Gas/Elektrolytgemisch). Bei der Wasserelektrolyse werden z.B. vorzugsweise Mischungen von Gas und Elektrolyt bzw. Wasser aus den Kammern, durch Pumpen in Sammelbehälter umgewälzt, so dass Wasserstoff an einem ersten Sammelanschluss in einem ersten Gassammelbehälter und Sauerstoff an einem zweiten Sammelanschluss in einem zweiten Gassammelbehälter gesammelt wird. Der Elektrolyt wird von dem ersten und dem zweiten Sammelbehälter zurück in die Kammern, durch hierfür bereitgestellte Öffnungen geführt. Die Umwälzung kann zu einem erhöhten Druck in den Reaktionskammern führen. Die Ausführungen der Gehäuse und der Zu- und Abführung von Gasen und Elektrolyten werden nach Bedarf und Stand der Technik ausgelegt

Ein PV-EC Modul in der erfindungsgemäßen Photovoltaik- Elektrolyse-Einheit weist mindestens eine Elektrolyseurzelle, ein photovoltaisches Modul und eine Dichtung auf.

Der flüssige Elektrolyt der Elektrolyseurzelle richtet sich dabei nach der angedachten Gasproduktion und ist dabei bevorzugt Wasser oder auf wässriger Basis, welche entweder basische (z.B. KOH, NaOH oder Ca(OH)₂ oder saure Bestandteile (z.B. H₂SO₄ oder HClO₄) enthält für eine Produktion von Wasserstoff bzw., in der komplementären Reaktion, Sauerstoff durch Wasserspaltung.

Die Kammern zur Gasproduktion der Elektrolyseurzellen in den PV-EC Modulen und der PE-Einheit sind durch Separatoren voneinander getrennt. Für einen sauren Elektrolyt sind z.B. Proton-Austausch Membranen aus sulfoniertes Tetrafluorethylen-Polymer (PTFE), Polyetheretherketon (PEEK), Polystyrene-Sulfonate, Polyvinylidenfluorid (PVDF) oder andere lonomere und für einen basischen Elektrolyten z.B. mikroporöse Diaphragmen aus serpentinen Asbesten (Mg₃Si₂O₅(OH)₄) oder neuartige Anionen-Austausch Membranen aus organischen Materialien wie Polysulfonen, Polypropylenen, oder Polyphenylenen Sulfiden geeignet sowie Trimethylammonium quaternisierte Polymere wie Polystyrol oder Polyphenylenoxid. Die Materialien für die Separatoren sind in vorteilhafter Weise plastisch formbar und flächig, d.h. in Form von Folien herstellbar.

Die Elektroden werden so hergestellt und montiert, dass sie von Flüssigkeiten durchdrungen werden können. Insbesondere eignen sich für Flüssigkeiten permeable Materialien, die inert gegenüber den Elektrolyten sind. Hierfür werden zum Beispiel Nickel-, Molybdän-, Nickelmolybdän-, Nickeleisen-, Nickelkobalt- oder Nickelchrom-schäume, sowie -Röhrchen aus den genannten Materialien oder Schwämme aus Edelstahl im basischen Medium verwendet. Für die, für die Wasserstoffproduktion eingesetzten Elektroden sind auch poröse Graphitstrukturen möglich. Im sauren Elektrolyten sind Schwämme oder poröse Sinterkörper aus Titan einsetzbar. Die für Flüssigkeiten permeablen Materialien können zusätzlich noch mit Katalysatormaterialien beschichtet sein bzw. bestehen insbesondere aus diesen, wie es in einer Ausführungsform, in der Nickelschaum verwendet ist, zutrifft. Als Katalysatormaterial für die Elektrolyse im sauren Medium ist z.B. eins aus der Gruppe Pt, Ir, Ru oder Legierungen aus diesen Metallen sowie IrOₓ und RuOₓ zu verwenden. Im basischen Medium ist z.B. eins aus der Gruppe Ni, Co, Mo, Fe oder eine Legierung aus diesen Metallen (z.B. NiMo, NiFe, NiCo oder NiCr) als Katalysatormaterial zu verwenden. Eine erste Elektrode ist dabei mit einem Katalysatormaterial zur Wasserstoffproduktion beschichtet, im sauren Medium vorteilhaft sind z.B. Pt, NiMo, NiMoCo und für basische Elektrolyten z.B. NiMo, CoFe oder NiCo und des Weiteren auch Ti, V, Cr, Mo, W, Mn, Fe, Ru, Co, Ni, Cu oder Zn. Eine zweite Elektrode ist mit einem Katalysatormaterial zur Sauerstoffproduktion beschichtet, im sauren Medium z.B. mit Ir oder Ru und im basischen z.B. mit NiCo, NiCr oder NiMoFe und des Weiteren auch Al, Si, Ti oder Zr. Eine Elektrolysezelle ist jeweils mit zwei Elektroden, bei der Wasserelektrolyse einer zur Wasserstoff- und einer zur Sauerstoffproduktion, zur entsprechenden unterschiedlichen Polung (Kathode = Wasserstoffproduktion, Anode = Sauerstoffproduktion) ausgestattet. Die Elektroden sind flächig ausgebildet. Durch die, durch die Anordnung der zwei unterschiedlichen Elektroden vorgegebene Verbindungslinie in einer Elektrolysezelle eines PV-EC Moduls ist eine erste Richtung definiert.

Die Dichtung besteht aus elektrisch leitenden Kontaktbereichen und mindestens einem nicht elektrisch leitenden Bereich, einem Isolatorbereich. Zum Abschluss der Elektrolyseurzellen gegenüber den photovoltaischen Modulen bildet die Dichtung, bestehend aus Isolatorbereich und Kontaktbereichen in der PE-Einheit einen, in einer Ebene liegenden Verbund, wie es z.B. durch eine Folie gegeben ist. Der Verbund kann auch aus den Rückseitenkontakten, wie z.B. Silber oder Schichtverbünde mehrerer Metallschichten, der Solarzellen in den photovoltaischen Modulen und einer isolierenden Matrix zur Bildung der Isolatorbereiche gebildet sein. Die Kontaktbereiche in der Dichtung bzw. dem Verbund sind dabei so angeordnet, dass jeweils eine erste Elektrode mit einem Minuspol einer Solarzelle aus dem photovoltaischen Modul über einen ersten elektrischen Kontaktbereich elektrisch verbunden ist und eine zweite Elektrode mit einem Pluspol einer Solarzelle aus dem photovoltaischen Modul über einen zweiten elektrischen Kontaktbereich elektrisch verbunden ist. Die Kontaktbereiche sind z.B. aus Metall, wie Ni-, Mo- oder Co oder aus dotierten Halbleiterschichten, wie z.B. dotiertem Silizium gebildet und können als Punktkontakte, jeweils ein Punktkontakt pro Elektrode und Pol einer Solarzelle oder als Streifenkontakte, ausgebildet sein. Die Isolatorbereiche sind aus dielektrischen Materialien, die ebenfalls inert gegenüber den eingesetzten Elektrolyten sind gebildet, wie z.B. aus SiO₂, TiO₂, Teflon, Silikon, Wasserglas, Harze oder anderen, beständigen Polymeren. Die Dichtung kann in Form einer Folie mit den oben beschriebenen leitenden und nicht leitenden Bereichen bestehen oder aus einer sehr dünnen Schicht, die direkt auf die Rückseite des photovoltaischen Moduls abgeschieden wird (z.B. amorphes TiO₂, NiO oder Al₂O₃) und dünn genug ist, dass sie transversal genügend leitend aber lateral hinreichend isolierend ist. Die Dichtung gewährleistet, dass der Elektrolyt nicht in Kontakt kommt mit Bauteilen des photovoltaischen Moduls, wie den Kontaktbereichen, Solarzellen und Kontaktierungen der Solarzellen. Die Elektrolyseurzellen sind mindestens teilweise von dem Gehäuse begrenzt.

Jedes photovoltaische Modul eines PV-EC Moduls weist eine zur vorgesehenen Reaktion, Wasserspaltung oder Reduktion von CO₂, genügende Ausgangsspannung auf.

Es weist ferner mindestens ein lichtdurchlässiges Substrat und mindestens eine Solarzelle, mit mindestens jeweils einem Minuspol und einem Pluspol auf. Es kann dabei vorteilhaft sein, dass einer Solarzelle zwei photovoltaische Module zugeschlagen sind, wobei zwei photovoltaische Module einen gemeinsamen Pol z.B. den Rückkontakt ein und derselben Solarzelle haben. Das Substrat ist dabei insbesondere aus Glas oder einem mit transparenten, leitfähigen Oxid beschichteten Glas gebildet.

Ein Minuspol der mindestens einen Solarzelle ist über einen Kontaktbereich mit der ersten Elektrode, die zur Halbreaktion der Reduktion, z.B. Wasserstoffproduktion, eingerichtet ist, in elektrischem Kontakt. Ein Pluspol der mindestens einen Solarzelle ist über einen anderen Kontaktbereich mit der zweiten Elektrode, die zur Halbreaktion der Oxidation, z.B. Sauerstoffproduktion, eingerichtet ist, in elektrischem Kontakt. Eine Elektrode darf nicht mit zwei Kontaktbereichen unterschiedlicher Polung in Kontakt sein.

Die mindestens eine Solarzelle in einem photovoltaischen Modul ist mit den Elektroden in Serie geschaltet. Mehrere Solarzellen in einem photovoltaischen Modul sind dabei ebenfalls entsprechend mit den Elektroden in Serie verschaltet.

Solarzellen die in der erfindungsgemäßen PE-Einheit zum Einsatz kommen können sind z.B. solche basierend auf Si-Wafern, Dünnschichtt-Si, -CdTe sowie CIGS-Dünnschichtsolarzellen. Si-Wafer und CIGS Solarzellen haben offene Klemmspannungen (Voc) in einem Bereich von 0,6 V bis 0,8 V. CdTe Solarzellen erreichen auf Grund der höheren Bandlücke bis zu Voc = 0.9 V. Geeignete Si-Dünnschichtsolarzellen gibt es in verschiedenen Konfigurationen. Dies sind zum Beispiel Solarzellen aus hydrogenisiertem amorphem Silizium (a-Si:H) mit bis zu Voc = 1.1 V, wobei solche aus hydrogenisiertem mikrokristallinem Silizium (µc-Si:H) bis zu Voc = 0.7 V erreichen. Darüber hinaus kommen z.B. Kombinationen aus diesen Materialien in Stapelzellen wie z.B. a-Si:H/a-Si:H Tandem Solarzellen (bis zu Voc = 2.0 V), a-Si:H/µc-Si:H Tandem Solarzellen (bis zu Voc = 1.6 V), a-Si:H/a-Si:H/µc-Si:H oder a-Si:H/µc-Si:H/µc-Si:H Triple Solarzellen mit bis zu Voc = 2.4 V bzw. Voc = 2.0V oder a-Si:H/a-Si:H/µc-Si:H/µc-Si:H Quadruple Solarzellen mit bis zu 3.0 V in Frage für die Verwendung in erfindungsgemäßen PE-Einheiten. Für einen effizienten Betrieb eines PV-EC Moduls muss das Solarmodul im Arbeitspunkt eine möglichst hohe Stromdichte liefern. Geeignet für einen guten Betrieb unter Normbedingungen (AM1.5G) sind z.B. vier standardmäßige Si-Wafer Solarzellen oder drei Si-Heterokontaktsolarzellen. Halb- oder Viertelwaferzellen sowie ähnlich in der Größe reduzierte Solarzellen sind dabei insbesondere geeignet. Dünnschicht-Si basierte Stapelzellen sind besonders geeignet, da auf Grund der hohen Ausgangsspannung eine Solarzelle pro photovoltaischem Modul ausreichend ist. Dünnschicht-Si- sowie -CdTe-Module in der sogenannten "Superstrat" - Konfiguration ausgeführt, sind insbesondere geeignet in Hinblick darauf, dass es fertigungstechnisch einfach ist Elektronen- und Lochkontakt auf der Rückseite mit geringem Abstand anzuordnen.

Im Fall, dass Si-Wafer Solarzellen eingesetzt werden, ist es Vorteilhaft für die erfindungsgemäße PE-Einheit, wenn photovoltaische Module in denen ein Teil der Solarzellen durch den Elektronenkontakt und ein anderer Teil durch den Lochkontakt beleuchtet werden, insbesondere im Verhältnis (wechselseitig gültig) 1:2 vorliegen. Die Verschaltung kann bei solchen Modulen mit geringerem Flächenverlust als in üblichen Solarzellmodulen realisiert werden, da abwechselnd zwei Front- und zwei Rückkontakte miteinander verschaltet werden.

Bei Dünnschichtmodulen wird gegebenenfalls die Verschaltung verschachtelt ("interdigitierend") realisiert: Dabei wird innerhalb des Solarzellfertigungsprozesses zunächst der eine Kontakt unterbrochen, dann die Solarzelle abgeschieden, die wiederum unterbrochen wird und zuletzt der andere Kontakt abgeschieden und dann unterbrochen wird. Die optimale Solarzelle hat eine Streifenform welche die Länge des Glassubstrats erreichen kann und eine Breite, welche bestimmt wird durch die Eigenschaften eines verwendeten TCOs und des Fertigungsprozesses und im Bereich von 3-30 mm liegt. Im Fall, dass die Dünnschichtsolarzellen Si oder -CdTe-Solarzellen sind, ist es vorteilhaft, wenn die Länge der PV-EC-Einheit die gleiche Länge hat wie die PE-Einheit. Die Breite der Dünnschicht-Modulstreifen ist hier insofern vorteilhaft, als dass die Anforderung an die elektrische Leitfähigkeit der Elektroden verringert wird. Es können also z.B. Schäume mit einer höheren Porosität verwendet werden. Werden dazu im Gegensatz z.B. vier ganze (handelsübliche) Standard Si-Wafer Solarellen mit einer Kantenlänge von 15,6 cm pro photovoltaischem Modul verwendet, liegen beide Pole = (3 * 15,6 cm =) 46,8 cm auseinander, wenn der Rückkontakt einer Solarzelle flächig als Pol benutzt wird und der andere Kontakt zurückgeführt wird und keine weiteren Leitungselemente verwendet werden. Der Abstand zwischen beiden Polen geht in den Widerstand ein, gleichzeitig ist der fließende Strom durch große Modulflächen hoch und die elektrischen Verluste dementsprechend größer.

**I**n der erfindungsgemäßen Photovoltaik- Elektrolyse-Einheit sind die Photovoltaik- Elektrolysemodule so angeordnet, dass sich in der ersten Richtung die Polung der Elektroden benachbarter PV-EC Module abwechselt. Die Elektroden sind dabei wenigstens abschnittsweise derart ausgebildet, dass in der ersten Richtung direkt benachbart zueinander angeordnete Elektroden, innerhalb eines PV-EC-Moduls und darüber hinaus, durch Formschluss miteinander in Kontakt sind, so dass diese teilweise überlappende Bereiche aufweisen. Der Formschluss wird dabei insbesondere durch eine Ausformung, die mindestens eine Stufenfalz aufweist von mindestens Elektroden einer Polung, d.h. mindestens von Elektroden die eine gleiche Polung aufweisen, erzielt. Vorzugsweise sind die Elektroden beider Polung mit identischen Stufenfalzen ausgebildet. Andere Ausformungen, mit denen eine teilweise Überlappung erzielt werden kann, z.B. eine Ausformung als Nut und Feder, sind hiervon mit inbegriffen. Die Falzen der entsprechend ausgeformten Elektroden, sind dabei von den Dimensionen angepasst an die Dimensionen der jeweils anderen, angrenzenden Elektroden, mit oder ohne Falz. Die überlappenden Bereiche sind parallel zu den photovoltaischen Modulen angeordnet. Diese Anordnung begünstigt eine platzsparende Ausführung der erfindungsgemäßen PE-Einheit. Die Separatoren sind in den überlappenden Bereichen zwischen den Elektroden unterschiedlicher Polung angeordnet und jeweils in direktem Kontakt mit diesen. Sie bilden, durch Ausdehnung über den Kontaktbereich der Elektroden hinaus, im Abschluss mit den Isolatorbereichen der Dichtung und dem Gehäuse die Kammern für die Gasproduktion. Sie erstrecken sich dabei über den überlappenden Bereich der Elektroden hinaus mindestens auf einer ersten Seite bis zum jeweils nächsten Isolatorbereich der Dichtung und auf den übrigen Seiten bis zum Gehäuse. Der durch die Überlappung der Elektroden entstehende Stapel, der mindestens besteht aus "Elektrode einer Polung-Separator-Elektrode anderer Polung" ist dabei, durch eine entsprechende Anpassung der Dimensionen des Gehäuses, durch eine parallel angeordnete Gehäusewand anpressbar bzw. wird er, bei entsprechender Dimensionierung in der zum Stapel senkrechten Richtung gestaucht. Dadurch ist ein schlüssiger Kontakt zwischen den überlappenden Elektroden und den Separatoren, über annähernd die gesamte überlappende Fläche herstellbar. Ferner wird durch den Druck, der auf die porösen Metallschäume ausgeübt wird, der Separator gespannt und so die Kontaktflächen zwischen Separator und Elektroden vergrößert.

Die erfindungsgemäße Anordnung der Elektroden ermöglicht PE-Einheiten und PV-EC Module in denen die ohmschen Verluste gegenüber dem Stand der Technik einfach und kostengünstig verringert sind. Gegenüber einem ersten Anordnungsmodus des Standes der Technik liegt der Vorteil darin, dass die ohmschen Verluste im Elektrolyten, die durch die Transportwege der Ionen zwischen den Elektroden über die Separatoren entstehen, auf das kleinstmögliche Maß minimiert sind, da diese in direktem Kontakt miteinander stehen. Gegenüber dem zweiten Anordnungsmodus liegt der Vorteil darin, dass die Dimensionierung des photovoltaischen Moduls bzw. der in diesem enthaltenen Solarzellen in geringerem Maße durch die Dimensionen des Elektrolyseur limitiert ist, sondern wie auch bei handelsüblichen photovoltaischen Modulen gehandhabt werden kann, z.B. im Hinblick auf die fertigungstechnisch optimale Wafergröße bzw. Solarzellfläche, bzw. bei Dünnschichtsolarzellen, die Optimierung der Solarzellflächengröße in Hinblick auf die Leitfähigkeit des verwendeten TCOs. Weiterhin vorteilhaft ist, dass die erfindungsgemäßen PE-Einheiten beliebig erweiterbar sind unter Erhalt der bestimmenden optimierenden Bedingung, d.h. dem überlappenden Anordnen der Elektroden. Diese Anordnung ermöglicht die Minimierung der Transportwege der Ionen bei gleichzeitiger Ermöglichung der Minimierung der Dimensionen der Solarzellen und Kontakte.

In einer zweiten Ausführungsform sind mindestens abschnittsweise in der Photovoltaik-Elektrolyse-Einheit die flächigen, für Flüssigkeiten permeablen Elektroden als wechselseitige Stufenfalzen ausgebildet und in einer dritten Ausführungsform sind mindestens abschnittsweise die Elektroden einer Polung mit Stufenfalzen ausgebildet. Zum Formschluss mit den benachbarten Elektroden, auch solchen aus benachbarten PV-EC-Modulen, sind die Elektroden in den Dimensionen aufeinander abgestimmt. Die Elektroden können sich dabei, insbesondere in der dritten Ausführungsform, auch über mehrere PV-EC-Module erstrecken bzw. mehreren PV-EC-Modulen auch funktional zugerechnet werden. Die verschiedenen Ausformungen der Elektroden kann jeweils mit beliebigen Ausführungsformen des photovoltaischen Moduls kombiniert werden.

In einer vierten Ausführungsform erstrecken sich die flächigen, für Flüssigkeiten permeablen Elektroden und die Separatoren entlang einer zweiten Richtung, senkrecht zur ersten Richtung, wobei diese Richtung in der Ebene der flächigen Elektroden liegt. Die Elektroden und Separatoren liegen bei genügender Erstreckung als Streifen vor. Die Kontakte können in dieser Ausführungsform ebenfalls als Streifen ausgeformt sein. Die Anordnung von Photovoltaik- Elektrolysemodulen der ersten Richtung wiederholt sich dabei in der zweiten Richtung, so dass entlang der zweiten Richtung gestreckte Kammern für die Gasproduktion, z.B. Wasserstoffproduktion und Sauerstoffproduktion, gebildet sind. In vorteilhafterweise fällt die Erstreckungsrichtung der Kammern mit der Flussrichtung des Elektrolyten zusammen, wenn dieser durch Pumpen umgewälzt wird. Durch die Anordnung dieser Ausführungsform der PV-EC-Module ist die PE-Einheit in besonders vorteilhafter Weise in der Fläche erweiterbar.

Die Streifen der Elektroden und Separatoren haben eine Länge, die kleiner oder gleich der Länge oder Breite der PE-Einheit ist und wobei die Länge in einem Bereich zwischen 0,1 m und 3 m und die Breite in einem Bereich zwischen 0,5 cm und 150 cm liegt. Der Abstand der elektrischen Kontaktbereiche liegt dabei in einem Bereich zwischen 0,1 cm und 50 cm.

Zwei weitere Ausführungsformen weisen im photovoltaischen Modul eine Tandem-Solarzelle bzw. eine Dreifach-Solarzelle auf. Diese sind nach Stand der Technik ausgelegt und können auch als Superstrat ausgeführt sein. Der Rückkontakt, d.h. der dem für den Lichteinfall vorgesehen Seite abgewandte Kontakt der Solarzellen ist direkt über einen elektrischen Kontaktbereich mit einer Elektrode elektrisch verbunden. Die Polung des Rückkontakts der Solarzelle als Minus oder Pluspol bestimmt dabei die Elektrode, mit der der Kontakt hergestellt wird. Pluspole sind mit den Elektroden zur Sauerstoffstoffproduktion und Minuspole mit denen zur Wasserstoffproduktion verbunden. Der Frontkontakt der Solarzelle ist in diesen Ausführungsformen als transparente, elektrisch leitfähige Schicht, z.B. Indiumzinnoxid, Fluor-Zinn-Oxid, Aluminiumzinkoxid, Antimon-Zinn-Oxid oder auch als transparentes, leitfähiges Polymer ausgebildet. Sie erstreckt sich in der ersten Richtung über den Schichtstapel der Solarzellen hinaus, und ist in der überständigen Fläche mit der, nicht durch den Rückkontakt der Solarzelle verbundenen Kontaktbereich einer Elektrode elektrisch verbunden. Der betreffende Kontaktbereich ist dabei so ausgebildet, dass er den, durch den Schichtstapel der Solarzelle bedingten Abstand überbrückt. Die transparente, elektrisch leitfähige Schicht erstreckt sich in vorteilhafter Weise entsprechend der, das Gehäuse begrenzenden Glasplatte.

In ebenfalls zwei weiteren Ausführungsformen weist das photovoltaische Modul vier c-Si (monokristallines Silizium) Standard Solarzellen bzw. drei a-Si:H/c-Si-Solarzellen auf. Dabei bedeutet a-Si:H/c-Si eine Heterokontaktsolarzelle gebildet aus einer oder mehreren a-Si:H, d.h. Schichten auf Basis von hydrogenisiertem amorphem Silizium und einem c-Si Wafer. In diesen Ausführungsformen sind die drei Solarzellen im PV-EC Modul in der ersten Richtung nebeneinander so angeordnet, dass zwei der Solarzellen nebeneinander bezüglich ihrer Polung gleich ausgerichtet sind. Nur eine dieser beiden gleich ausgerichteten Solarzellen ist mit einem rückseitigen Pol (Rückseitenkontakt) mit der entsprechend der Polung ergänzenden Elektrode der Elektrolyseurzelle elektrisch verbunden. Eine dritte Solarzelle, die bezüglich ihrer Polung andersherum als die zwei gleichausgerichteten Solarzellen orientiert ist, ist mit ihrem rückseitigen Pol (Rückseitenkontakt) mit der jeweils anderen Elektrode in der Elektrolyseurzelle elektrisch verbunden. Diese beiden Ausführungsformen sind in besonderer Weise vorteilhaft, da Sie eine platzsparende Ausführung, einen geringen Abstand der beiden Pole des photovoltaischen Moduls zueinander und einfache, kostengünstige Fertigung ermöglichen.

In Ausführungsformen sind zwischen den photovoltaischen Modulen, die vier c-Si (monokristallines Silizium) Solarzellen bzw. drei a-Si:H/c-Si-Solarzellen aufweisen, Folien aus Ethylenvinylacetat (EVA-folien) zwischen den photovoltaischen Modulen und dem Substrat angeordnet. Dadurch wird eine verbesserte Abdichtung der PE-Einheit erzielt.

Eine zehnte Ausführungsform beinhaltet Elektroden die aus Nickelschaumstreifen gebildet sind, wobei das Nickel gleichzeitig als Katalysator für die Wasserstoffproduktion an der einen Elektrode dient. Die zweite Elektrode ist entsprechend für die Katalyse der Sauerstoffproduktion beschichtet.

In einer weiteren Ausführungsform ist der Separator aus Tetrafluorethhylen-Polymer gebildet.

### Ausführungsbeispiele

Die Erfindung soll in fünf Ausführungsbeispielen und anhand von Figuren näher erläutert werden.

Die Figuren zeigen:
- Figur 1:: Querschnitt durch einen Ausschnitt einer erfindungsgemäßen Photovoltaik- Elektrolyse-Einheit in einem ersten Ausführungsbeispiel.
- Figur 2:: Querschnitt durch einen Ausschnitt einer erfindungsgemäßen Photovoltaik- Elektrolyse-Einheit in einem zweiten Ausführungsbeispiel.
- Figur 3:: Querschnitt durch einen Ausschnitt einer erfindungsgemäßen Photovoltaik- Elektrolyse-Einheit in einem dritten Ausführungsbeispiel.
- Figur 4:: Querschnitt durch einen Ausschnitt einer erfindungsgemäßen Photovoltaik- Elektrolyse-Einheit in einem vierten Ausführungsbeispiel.
- Figur 5:: Querschnitt durch einen Ausschnitt einer erfindungsgemäßen Photovoltaik- Elektrolyse-Einheit in einem fünften Ausführungsbeispiel.

Die Figuren 1 bis 5 zeigen jeweils schematisch einen Querschnitt eines Ausschnitts von fünf Ausführungsbeispielen für eine erfindungsgemäßen Photovoltaik- Elektrolyse-Einheit (PE-Einheit). Die Darstellungen dienen nur zur Illustrierung und sind nicht maßstabsgetreu. In dem Ausschnitt sind alle Elemente eines von den mindestens zwei erfindungsgemäßen Photovoltaik-Elektrolysemodulen (PV-EC-Module) in einer PE-Einheit mindestens teilweise gezeigt sowie einige benachbarter PV-EC-Module. Die endständigen Begrenzungslinien, die nicht in gerader Linie ausgeführt sind, kennzeichnen Elemente, die im gezeigten Ausschnitt nicht vollständig enthalten sind und sich darüber hinaus erstrecken.

Das Gehäuse **01** ist in allen Ausführungsbeispielen ein herkömmliches Gehäuse gemäß dem Stand der Technik, z.B. aus Polymethylmetacrylat (PMMA). Ein geeignetes PMMA ist unter dem Markennamen Plexiglas® von Evonik Performance Materials GmbH erhältlich. In den Figuren 1 bis 6 zu sehen ist nur der, die PE-Einheit begrenzende, rückwärtige (von der Seite für den Lichteinfall abgewandte) Teil des Gehäuses **01**. Auf der dem Licht zugewandten Seite wird das Gehäuse durch das Glassubstrat bzw. durch das photovoltaische Modul mit Dichtung gebildet. Das Gehäuse **01** ist mit (nicht gezeigt) jeweils zwei Öffnungen für die Zufuhr und Abfuhr von Elektrolyt bzw. Elektrolyt-Gasgemisch pro Kammer versehen. Der Elektrolyt bzw. das Elektrolyt -Gasgemisch wird durch Pumpen in Sammelbehälter (nicht gezeigt) umgewälzt, so dass Wasserstoff an einem ersten Sammelanschluss in einem ersten Gassammelbehälter und Sauerstoff an einem zweiten Sammelanschluss in einem zweiten Gassammelbehälter gesammelt wird. Der Elektrolyt wird von dem ersten und dem zweiten Sammelbehälter zurück in die Kammern, durch die hierfür bereitgestellten Öffnungen geführt.

Die Elektrolyseurzelle ist in dem ersten Ausführungsbeispiel, Fig. 1, wie folgt ausgebildet. Der Separator **02** ist aus einem mit quaternärem Ammonium funktionalisierten Polysulfon basiertem Polymer gebildet und flächig bzw. liegt in Form einer Folie vor. Die flächigen Elektroden (**03a, 03b**) sind aus Nickelschaum gebildet, wobei das Nickel zusätzlich mit einer dünnen Schicht aus Katalysatormaterial beschichtet ist, dass für die erste Elektrode (**03b**) aus NiMo für die Wasserstoffproduktion besteht und wobei die erste Elektrode (**03b**) zur Polung mit einem Minuspol einer Solarzelle des photovoltaischen Moduls elektrisch verbunden ist. Eine zweite Elektrode (**03a**) ist ebenfalls aus Nickelschaum gebildet und mit NiCo als Katalysator für die Sauerstoffproduktion beschichtet und wird zur Polung mit einem Pluspol einer Solarzelle des photovoltaischen Moduls elektrisch verbunden. In den durch die Separatoren **02,** im Verbund mit dem Gehäuse **01,** den Dichtungen, gebildet aus den Kontaktbereichen (**04a, 04b)** und den Isolatorbereichen **05,** gebildeten Kammern befindet sich der Elektrolyt aus 1 M KOH in Wasser, der auch die Poren der Elektroden **(03a, 03b)** füllt. Die Flussrichtung des Elektrolyten entspricht der Richtung senkrecht zur Zeichenebene. Diese Ausführung der Elektroden ist kompatibel mit allen Ausführungsbeispielen für die photovoltaischen Module.

In der Dichtung sind im ersten Ausführungsbeispiel die Kontaktbereiche (**04a, 04b**) aus Nickel-Metallfolie gebildet und die Isolatorbereiche **05** aus SiO₂ gebildet. Die Metallfolie und die SiO₂-Bereiche bilden dabei einen Verbund.

Die Polung benachbarter Elektroden (**03a, 03b**), ist festgelegt durch Kontaktierung mit Polen der Solarzellen (**S1**, **S2**, **S3**) des photovoltaischen Moduls und wechselt sich in einer ersten Richtung ab. Jede zweite Solarzelle hat in etwa die doppelte aktive Fläche, um jeweils mit der benachbarten Zelle und der Hälfte der darauffolgenden Zelle ein photovoltaisches Modul zu bilden. Die erste Richtung liegt dabei in der Zeichenebene parallel zum Gehäuse **01**. Die Polung der Elektroden **(03a, 03b)** benachbarter PV-EC Module (nur im Ansatz gezeigt) wechselt sich in der ersten Richtung ebenfalls ab. Die Elektroden **(03a, 03b)** sind dabei derart ausgebildet, dass in der ersten Richtung direkt benachbart zueinander angeordnete Elektroden **(03a, 03b)** durch Formschluss miteinander in Kontakt sind, so dass diese teilweise überlappende Bereiche aufweisen. Der Formschluss wird durch eine Ausformung der Elektroden **(03a, 03b)** als wechselseitige Stufenfalz, wie in den Fig. 1 gezeigt, erzielt. Der mechanische Formschluss wird über den, zwischen den Elektroden angeordneten Separator **02** realisiert. Da der Separator **02** elektrisch isoliert, kommt es zu keinem elektrischen Kurzschluss zwischen den beiden Elektroden (03a, 03b) im überlappenden Bereich. Ein lonenaustausch über den Separator **02** ist gleichwohl möglich.

Bei der erfindungsgemäß überlappenden Anordnung der Elektroden übernimmt der Separator zusätzlich eine mechanische Funktion, nämlich die Kraftübertragung zwischen den beiden Elektroden in der Stapelrichtung. Bei einem herkömmlichen Stapelaufbau ohne Überlappung erfüllt der Separator lediglich zwei Funktionen, nämlich elektrische Isolation und ionische Leitung. Die zusätzliche mechanische Funktion des Separators unterscheidet den erfindungsgemäßen Zellaufbau von herkömmlichen Bauweisen.

Die wechselständigen Falzen der Elektroden **(03a, 03b)** sind im Profil, wie in der Fig. 1 gezeigt, jeweils als eine obere und eine untere auszumachen und sind dabei von den Dimensionen angepasst, so dass ein Formschluss in den überlappenden Bereichen erzielt wird. Die Separatoren 02 sind in den überlappenden Bereichen zwischen den Elektroden (**03a, 03b**) unterschiedlicher Polung angeordnet und jeweils in direktem Kontakt mit diesen. Sie erstrecken sich dabei über den überlappenden Bereich der Elektroden **(03a, 03b)** hinaus auf einer ersten Seite bis zum jeweils nächsten Isolatorbereich **05** und auf den übrigen Seiten bis zum Gehäuse **01**. Auf der Seite, auf der die Separatoren **02** an die Isolatorbereiche **05** reichen sind in den Ausführungsbeispielen die Separatoren **02** teilweise zwischen eine Elektrode **(03a, 03b)** und einen Isolatorbereich **05** geführt. Auf der Seite auf der die Separatoren **02** an das Gehäuse reichen, sind diese in den Ausführungsbeispielen teilweise zwischen die Elektroden **(03a, 03b)** und das Gehäuse geführt. Diese Ausführung begünstigt die Fixierung der Separatoren **02** in der Fertigung und gewährleistet den Abschluss der Kammern voneinander und ermöglicht gleichzeitig eine Minimierung der Verluste durch den Ionen-Transport. Da die porösen Nickelschäume eine sehr viel höhere Leitfähigkeit haben als der Elektrolyt, werden die gesamten Verluste durch den lateralen Ladungsträgertransport minimiert. Durch die Anordnung der Separatoren werden die Kammern für die Wasserstoffproduktion und die Sauerstoffproduktion, jeweils mindestens zwei pro PE-Einheit, gebildet.

Durch die erfindungsgemäße Ausformung der Elektroden (**03a, 03b**), wird der Transportweg der Ionen von einer Elektrode (**03a, 03b**) zur anderen (**03a, 03b**) kleinstmöglich, da er sich im Minimalfall lediglich auf die Strecke durch den, die jeweiligen, die Elektroden (**03a, 03b**) trennenden Separator **02** beschränkt. Die erfindungsgemäße Ausformung der Elektroden (**03a, 03b**) ermöglicht außerdem gleichzeitig in vorteilhafter Weise die Erweiterung einer PE-Einheit um weitere PV-EC Module und ermöglicht eine Ausführung mit geringer Dicke.

Der durch die Überlappung der Elektroden und die Führung der Separatoren **02** zwischen Elektroden und Gehäuse bzw. Kontakte entstehende Stapel "Separator **02** - Elektrode einer Polung (**03a**)-Separator **02**-Elektrode anderer Polung (**03b**)-Separator **02**" ist dabei, durch eine entsprechende Anpassung der Dimensionen des Gehäuses **01,** durch die rückseitige, parallel angeordnete Gehäusewand anpressbar bzw. wird er, bei entsprechender Dimensionierung des Gehäuses **01,** in der zum Stapel senkrechten Richtung im Gehäuse gestaucht. Dadurch ist in vorteilhafter Weise ein schlüssiger Kontakt zwischen den überlappenden Elektroden **(03a, 03b)** und den Separatoren **02,** über annähernd die gesamte überlappende Fläche und eine Dichtung der Kammern herstellbar. Ferner wird durch den Druck, der auf die porösen Metallschäume ausgeübt wird, der Separator gespannt und so die Kontaktflächen zwischen Separator und Elektroden vergrößert. Die erfindungsgemäße Ausformung und Anordnung der Elektroden (**03a, 03b**) erstreckt sich in vorteilhafter Weise bis zum Abschluss einer PE-Einheit durch das Gehäuse, wo sie beendet wird und jeweils endständige Elektroden sich in der ersten Richtung im Wesentlichen nur unterhalb der elektrischen Kontaktbereiche (**04a, 04b**) erstrecken.

Die flächigen Elektroden (**03a, 03b**), flächigen Separatoren **02** und die Kontaktbereiche (**04a, 04b**) sind streifenförmig ausgebildet und erstrecken sich in einer zweiten Richtung, senkrecht zur ersten Richtung, die mit der Senkrechten auf die Zeichenebene zusammenfällt. Die Anordnung von Photovoltaik- Elektrolysemodulen der ersten Richtung setzt sich dabei wiederholend in der zweiten Richtung fort, so dass entlang der zweiten Richtung gestreckte Kammern für die Wasserstoffproduktion und die Sauerstoffproduktion gebildet sind. Diese Anordnung trägt in vorteilhafter Weise ebenfalls zur Erweiterung einer PE-Einheit bei.

Das photovoltaische Modul weist im ersten Ausführungsbeispiel drei a-Si:H/c-Si-Solarzellen (**S1**, **S2**, **S3**) auf, die in "Superstrat-Konfiguration" auf dem Glassubstrat **06** aufgebracht sind. Die Solarzellen (**S1**, **S2**, **S3**) sind untereinander durch Kontakte **10** interdigitierend in Serie geschaltet und mit den Elektroden (**03a, 03b**) über die elektrischen Kontaktbereiche (**04a, 04b**) ebenfalls in Serie geschaltet. Jede Solarzelle (**S1, S2, S3**) weist dabei jeweils einen Emitter **14** auf, der in dem Ausführungsbeispiel aus p-dotiertem (vorwiegend Loch-leitendem) a-Si:H besteht und zusammen mit weiteren funktionalen Schichten als Pluspol der Solarzelle ausgebildet ist. Wird die Solarzelle durch den Emitter **14** beleuchtet, kann sie im weiteren Sinne als Photokathode bezeichnet werden, da die Solarzelle bei Beleuchtung direkt die Elektrode mit Elektronen versorgt. Weiterhin hat jede Solarzelle einen Absorber **08** der aus einem n-dotierten Si-Wafer besteht und zusammen mit weiteren funktionalen Schichtenden Minuspol der Solarzelle bildet. Ein Pluspol einer Solarzelle **S3** ist über den elektrischen Kontaktbereich **04a** mit der Elektrode **03a**, die zur Sauerstoffproduktion ausgelegt ist, elektrisch verbunden, wodurch die Elektrode **03a** als Anode gepolt ist. Sie kann im weiteren Sinne auch als Photoanode bezeichnet werden. Ein Minuspol einer Solarzelle **S1** ist über den Kontaktbereich **04b** der mit der Elektrode **03b**, die zur Wasserstoffproduktion ausgelegt ist elektrisch verbunden, wodurch die Elektrode **03b** als Kathode gepolt ist. Die Elektrode **03a** besteht aus zwei Nickel-Schäumen mit einer hohen Porosität von 95%. Die Elektroden haben die Abmessungen (Länge x Breite x Höhe = 1460 mm x 100 mm x 1,6 mm³) und werden wie dargestellt versetzt montiert. Die Elektroden sind beschichtet mit einer 500 nm dünnen Schicht von NiCo Katalysator. Die Elektrode **03b**, hat die gleichen Abmessungen, ist jedoch mit NiMo gleicher Dicke als Katalysator beschichtet. Die Kontaktbereiche **04a** und **04b** bestehen aus Nickel, welches in Form einer Folie entlang der Solarzellen montiert wird. Zwischen den Kontaktbereichen **04a** und **04b** befindet sich eine dichtende Isolatorschicht **05,** welche aus SiO₂ besteht und aus einer Lösung mittels Siebdruck aufgetragen wird. Zwischen den Solarzellen (**S1**, **S2**, **S3**) und dem Glassubstrat **06** ist in dem Ausführungsbeispiel 1 eine Folie aus Ethylenvinylacetat **09** zur besseren Abdichtung der PE-Einheit angeordnet. Die offene Klemmspannung des photovoltaischen Moduls unter Standard Testbedingungen (STC) beträgt 1,9 V bis 2,3 V und die Abmessungen der Solarzellen beträgt 156 cm x 156 cm² für solche Solarzellen, die zu jeweils zwei photovoltaischen Modulen gehören (**S1, S3**) und 78 cm x 156 cm² für solche die nur zu einem Modul gehören (**S2**). Die Stromdichte kann bis zu 14 mA/cm² bei STC betragen. In der zur Zeichenebene senkrechten Richtung wiederholt sich die Anordnung der Solarzellen bis zum Ende der PE Einheit, welches durch das Gehäuse bestimmt ist, 10 Mal. In der waagerechten wiederholt sich die Solarzellabfolge vier Mal so dass insgesamt sechs Halbzellen und drei ganze Solarzellen in der Abfolge halb, halb, ganz, halb, ganz, halb, ganz, halb, halb angeordnet sind. Die gesamte aktive Fläche beläuft sich somit auf 1,46 m², vergleichbar mit einem herkömmlichen photovoltaischen Modul mit 60-Solarzellen. Dichtungs- bzw. Kontaktbereiche **(04a, 04b)** sowie Elektroden **(03a, 03b)** und Separatoren **02** sind in Streifen gestaltet (wie oben beschrieben), die über mehrere Solarzellen hinweggehen, entlang der gesamten Länge der PE-Einheit (∼1,4 m). Die Separatoren **02** bestehen aus einem Polyphenylensulfid-Netz, welches mit einer Mischung aus Polymer und Zirkon-Oxid beschichtet ist und eine Dicke von 500 µm und, eine Breite von 30 cm und eine Länge von 1,4 m und eine Porosität von 50% hat und wie in der Figur dargestellt montiert ist. Es ergeben sich somit fünf Kammern, die über jeweils eine Zufluss- und eine Abflussöffnung verfügen. Die Rückkontakte, welche gleichzeitig die Rückreflektoren sind, sind aus einem Schichtstapel aus 130 nm Indiumzinnoxid und 400 nm Silber gefertigt.

Je nach Ausführung hat das Glassubstrat **06** eine Dicke zwischen 1 mm und 10 mm, eine Breite von 0,1 m bis 10 m und eine Länge von 0,1 m bis 10 m. Die Streifen der Elektroden (**03a, 03b**) und Separatoren **02** haben eine Länge die der Länge der PE-Einheit entspricht (0,1 m bis 3 m) und die Breite der Elektroden (**03a, 03b**) beträgt 0,1 bis 50 cm und der Separatoren **02** 0,1 cm bis 55 cm. Die Stärke (Dicke) der Elektroden beträgt 0,1 bis 10 mm. Die Stärke der Separatoren beträgt 1 µm bis 1000 µm. Die Breite der Metallfolien als Kontaktbereiche beträgt 0,3 cm bis 20 cm. Wird eine Folie zur Dichtung benutzt hat diese eine Dicke zwischen 1 µm und 1000 µm. Die Breite der Isolatorbereiche beträgt 0,1 cm bis 50 cm. Die Dicke der Solarzellen (**S1, S2, S3**) beträgt 0,1 µm bis 500 µm.

Die Abmessungen in dem photovoltaischen Modul können durch die erfindungsgemäße Anordnung der Elektroden in Hinblick auf ohmsche Verluste im Vergleich zum Stand der Technik verringert werden, da die Auslegung in den Dimensionen sich an denen der Elektrolyseurzelle bemisst. Konkret geschieht das dadurch, dass nur die für das Erreichen der Überspannung mindestens nötigen Anzahl an Solarzellen (bei a-Si:H/c-Si Heterokontaktsolarzellen drei) pro photovoltaischem Modul in Reihe geschaltet werden und dafür mehrere PV-EC Module pro PE-Einheit eingesetzt werden können.

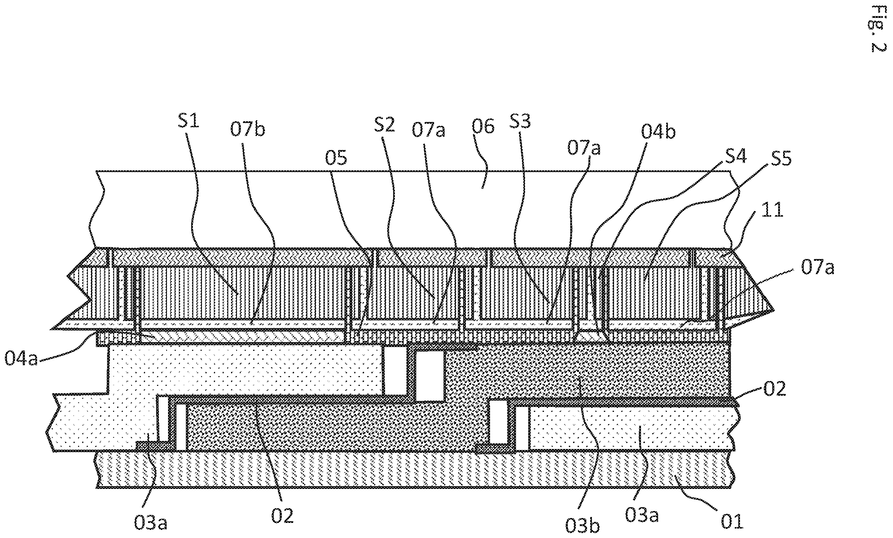

Die Fig. 2 zeigt schematisch einen Querschnitt eines Ausschnitts eines zweiten Ausführungsbeispiels einer erfindungsgemäßen Photovoltaik-Elektrolyse-Einheit (PE-Einheit).

Das zweite Ausführungsbeispiel ist hinsichtlich der Art, Beschichtung, Höhe bzw. Dicke, Länge und Anordnung der Elektroden (**03a, 03b**) und Separatoren **02** identisch mit dem ersten Ausführungsbeispiel bis auf den Unterschied, dass die Streifenbreite der Dichtungs- und Kontaktbereiche und Elektroden mit 2 cm und Separatoren mit 2,5 cm schmaler sind, auf Grund der schmaleren photovoltaischen Module. Die Ausführungen betreffend die Komponenten, die mit dem ersten Ausführungsbeispiel identisch sind gelten somit für das zweite mit.

Das photovoltaische Modul im zweiten Ausführungsbeispiel weist drei CdTe-Dünnschichtsolarzellen (**S1, S2, S3**) auf, die in Superstrat-Konfiguration aufgebaut sind. Unterhalb des Glassubstrats **06** ist zur Kontaktierung der Solarzellen (**S1, S2, S3**) als Frontkontakt eine TCO-Schicht **11** angeordnet, die, wie es bei der interdigitierten Serienverschaltung üblich ist, teilweise durch Laserschnitte unterbrochen ist (Breite der Unterbrechung ca. 50 µm, Breite der Zell-Streifen **S2** und **S3** 8 mm und 16 mm bei **S1,** die Hälfte von **S1** gehört zu dem nächsten photovoltaischen Modul auf der linken Seite). Die TCO-Schicht bildet den n-Bereich der Solarzellen (**S1, S2, S3**). Die CdTe-Schicht, welche ebenfalls mit gleicher Breite durch Laserschnitte, welche aber leicht versetzt zu denen des TCOs sind, unterbrochen ist, bildet den p-Bereich und Absorber. Durch die Unterbrechungen im Absorberbereich kommt der metallene Kontakt **07a** auch mit dem TCO in Verbindung. Eine zusätzliche Separierung, parallel zu den beiden vorherigen Schnitten der Absorber und Rückkontakte finalisiert die Serienverschaltung. Der Rückkontakt **07b** von **S1** ist elektrisch verbunden mit dem elektrischen Kontaktbereich **04a,** der wiederum mit der Elektrode **03a,** die zur Sauerstoffproduktion ausgebildet ist, verbunden ist wodurch die Elektrode **03a** als Anode gepolt ist. Der dichtende Kontaktbereich **04a,** Breite 16 mm (wie auch **4b,** Breite 1 mm) besteht in dieser Ausführung aus einem leitfähigen (mit Metall Partikeln versetztem) in basischen Medien stabilen Epoxydharz. Anders als bei der herkömmlichen interdigitierten Serienverschaltung sind nur die drei benötigten Solarzellen in Serie geschaltet und der schmale Zellstreifen **S4** (1 mm) ist kurzgeschlossen um den Elektronen Kontakt nach hinten zu legen. Das photovoltaische Modul hat eine Ausgangsspannung von 2,4 V und eine Stromdichte von bis zu 11 mA/cm². Mit **S5** beginnt das nächste photovoltaische Modul. Der kurzschließende Rückkontakt der Solarzelle **S4** ist elektrisch verbunden mit dem elektrischen Kontaktbereich **04b** der mit der Elektrode **03b,** die zur Wasserstoffproduktion ausgebildet ist, elektrisch verbunden ist, wodurch die Elektrode **03b** als Kathode gepolt ist. Die Streifenlänge ist 1,4 m. In einer PE-Einheit, sind 38 photovoltaische Module entsprechend dem zweiten Ausführungsbeispiel nebeneinander angeordnet. Die Dicke des TCO beträgt 0,05 µm bis 10 µm.

Die Dichtung, die aufgebaut ist aus den Kontaktbereichen (**04a, 04b**) und den Isolatorbereichen **05,** die ebenfalls aus Epoxidharz bestehen, welcher aber nicht mit Metallpartikeln versetzt (also isolierend) ist, ist in diesem Ausführungsbeispiel ausgeprägt durch die fertigungstechnischen Möglichkeiten der Superstrat-Konfiguration. Die Isolatorbereiche **05** trennen dabei die Kontaktbereiche **(04a, 04b)** so, dass eine Kontaktierung mit einem Minuspol und einem Pluspol der Solarzellen im photovoltaischen Modul, für die Elektroden gewährleistet ist.

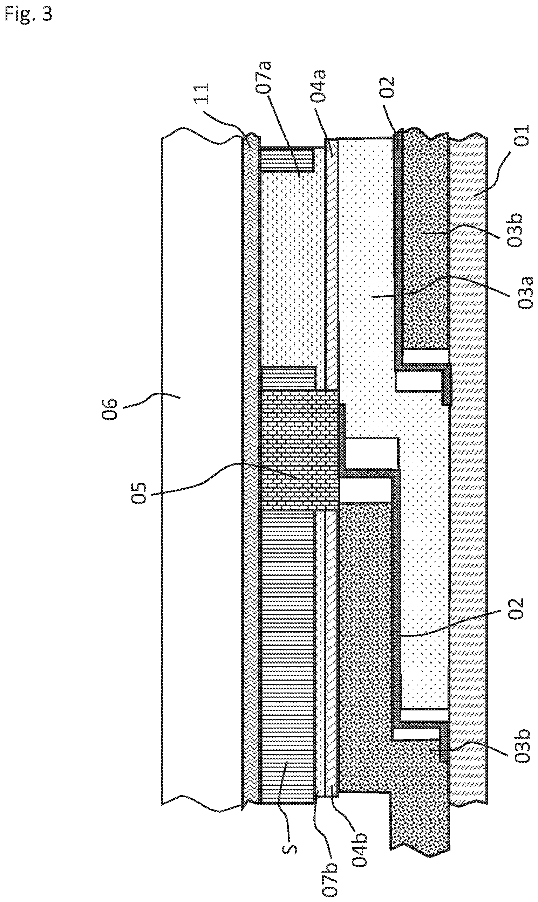

Die Fig. 3 zeigt schematisch einen Querschnitt eines Ausschnitts eines dritten Ausführungsbeispiels einer erfindungsgemäßen Photovoltaik- Elektrolyse-Einheit (PE-Einheit).

Das dritte Ausführungsbeispiel ist hinsichtlich der Anordnung, der Höhe (Dicke), und der Länge der Elektroden (**03a, 03b**), der Separatoren **02** sowie der Art (nicht aber der Breite) der Ausbildung der Dichtung (Kontaktbereiche **04a, 04b** und Isolatorbereiche **05**) identisch mit dem zweiten Ausführungsbeispiel. Unterschiedlich ist die Art der Elektroden, die im Fall von **03a** (Sauerstoff generierende Elektrode) ebenfalls aus Nickel besteht, aber mit 500 nm Ruthenium beschichtet ist für die Anwendung in einem sauren Elektrolyten. Die andere Elektrode **03b** besteht analog aus Nickel und ist mit 500 nm Platin beschichtet. Der Separator besteht aus sulfoniertem Tetrafluorethylen-Polymer, welches ebenfalls für die Anwendung in sauren Elektrolyten entwickelt ist. Die Ausführungen betreffend die Komponenten, die mit dem zweiten Ausführungsbeispiel identisch sind gelten somit für das dritte mit.

Das photovoltaische Modul im dritten Ausführungsbeispiel weist eine a-Si:H/a-Si:H/µc-Si:H Dreifach-Solarzelle **S** auf, die alleine schon eine genügend hohe Spannung (Voc = 2.4 V) besitzt, um mit bis zu 9 mA/cm² Elektrolyse (Wasserspaltung) zu betreiben. Unterhalb des Glassubstrats **06** ist zur Kontaktierung der Dreifach-Solarzelle **S** als Frontkontakt eine TCO-Schicht **11** angeordnet, die sich unterhalb des gesamten Glassubstrats **06** erstreckt und in diesem Ausführungsbeispiel auf dem p-Potential liegt. Die TCO-Schicht **11** ist mit dem Pluspol der Solarzelle **S** verbunden und durch den Kontakt **07a** (Silber) mit dem elektrischen Kontaktbereich **04a** der mit der Elektrode **03a,** die zur Sauerstoffproduktion ausgebildet ist, elektrisch verbunden, wodurch die Elektrode **03a** als Anode gepolt ist. Der metallene Kontakt **07a** ist zur Herstellung der elektrischen Verbindung, über die Dicke der Dreifach-Solarzelle **S** gestreckt. Diese Ausformung des Kontakts **07a** ist ohne Mehraufwand, fertigungsbedingt, wie in Ausführungsbeispiel zwei beschrieben, mittels einer adaptierten interdigitierten Verschaltung durch die Superstrat-Konfiguration einfach zu realisieren. Der Rückkontakt **07b** der Dreifach-Solarzelle **S** ist elektrisch verbunden mit dem elektrischen Kontaktbereich **04b** der mit der Elektrode **03b,** die zur Wasserstoffproduktion ausgebildet ist, elektrisch verbunden ist, wodurch die Elektrode **03b** als Kathode gepolt ist.

Die Abmessungen des photovoltaischen Moduls bestimmen, wie im vorhergegangenen Ausführungsbeispiel, die Abmessungen in der PE-Einheit. Das heißt, die Verringerung der ohmschen Verluste im Elektrolyten erfolgen unabhängig von der Auslegung des photovoltaischen Moduls, durch die erfindungsgemäße Anordnung der Elektroden, so dass die Auslegung in den Abmessungen der PE-Einheit sich an der Optimierung des photovoltaischen Moduls bemessen. Das wiederum bedeutet, dass gegenüber einem reinen photovoltaischen Modul die Zellstreifengröße der Solarzellen nicht verringert werden muss.

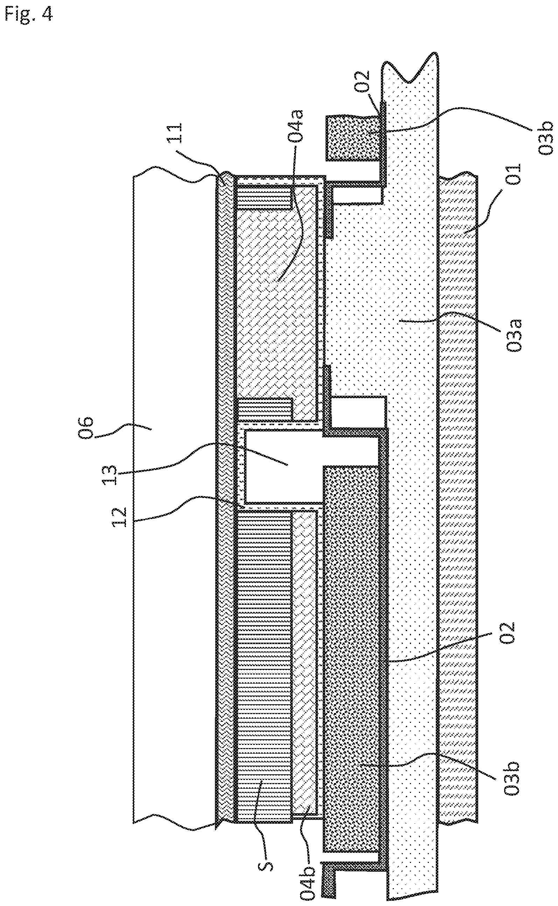

Die Fig. 4 zeigt schematisch einen Querschnitt eines Ausschnitts eines vierten Ausführungsbeispiels einer erfindungsgemäßen Photovoltaik-Elektrolyse-Einheit (PE-Einheit).

Das vierte Ausführungsbeispiel ist hinsichtlich der Länge, Art und Beschichtung der Elektroden **(03a, 03b)** und Länge und Art der Separatoren **02** identisch mit dem zweiten Ausführungsbeispiel, nicht aber hinsichtlich Ihrer Form. Die Ausführungen betreffend die Komponenten, die mit dem ersten Ausführungsbeispiel identisch sind gelten somit für das vierte mit.

Die Ausführung der Komponenten der Elektrolyseurzelle, Elektroden (**03a, 03b**) und Separatoren **02**, unterscheidet sich von denen der Ausführungsbeispiele eins bis drei in der Ausbildung der überlappenden Bereiche der Elektroden (**03a, 03b**). Diese sind hier wechselnd als flächige Elektroden **03b**, ohne Falz, und als flächige Elektroden **03a**, mit zwei, in der Figur unten liegenden Falzen ausgebildet und sind dabei von den Dimensionen angepasst, so dass ein Formschluss in den überlappenden Bereichen erzielt wird. Die Separatoren **02** sind in den überlappenden Bereichen zwischen den Elektroden (**03a, 03b**) unterschiedlicher Polung angeordnet und jeweils in direktem Kontakt mit diesen. Sie erstrecken sich dabei über den überlappenden Bereich der Elektroden (**03a, 03b**) hinaus auf einer ersten und zweiten Seite bis zum jeweils nächsten Dichtungsbereich **12.** Auf der Seite, auf der die Separatoren **02** an die Dichtungsbereiche **12** reichen sind in dem Ausführungsbeispiel die Separatoren **02** teilweise zwischen eine Elektrode (**03a, 03b**) und einen Dichtungsbereich **12** geführt. Diese Ausführung begünstigt die Fixierung der Separatoren **02** in der Fertigung und gewährleistet den Abschluss der Kammern voneinander und ermöglicht gleichzeitig eine Minimierung der Verluste durch den lonentransport. Da die porösen Nickelschäume eine sehr viel höhere Leitfähigkeit haben als der Elektrolyt, werden die gesamten Verluste durch den lateralen Ladungsträgertransport minimiert. Durch die Anordnung der Separatoren werden die Kammern für die Wasserstoffproduktion und die Sauerstoffproduktion, jeweils mindestens zwei pro PE-Einheit, gebildet.

Das photovoltaische Modul im vierten Ausführungsbeispiel weist eine a-Si:H/a-Si:H/µc-Si:H Dreifach-Solarzelle **S** auf. Unterhalb des Glassubstrats **06** ist zur Kontaktierung der Dreifach-Solarzelle **S** als Frontkontakt eine TCO-Schicht **11** angeordnet, die sich unterhalb des gesamten Glassubstrats erstreckt und auf p-Potential liegt. Die TCO-Schicht **11** ist mit dem Pluspol der Solarzelle **S** verbunden. Die Solarzelle **S** und der Kotaktbereich **04a,** der mit dem Pluspol der Solarzelle über die TCO-Schicht **11** verbunden ist, sind hier beabstandet voneinander, was sich u.a. aus fertigungstechnisch aus der Superstrat-Konfiguration ergibt, angeordnet. Der Kontaktbereich **04a** ist dabei teilweise von Solarzellbruchteilen eingefasst, was sich ebenfalls fertigungstechnisch ergibt. Die Beabstandung der Solarzelle **S** und des Kontaktbereichs **04a** ergibt einen Hohlraum **13,** der der Elektrolyseurzelle zugehört. Die Dichtung ist in diesem Ausführungsbeispiel gebildet aus den Kontaktbereichen **(04a, 04b)** und einer dünnen, 0,1 nm bis 10 nm dicken, lateral (d.h. in der Schichtebene) elektrisch isolierenden und transveral elektrisch leitenden Schicht **12,** hier TiOₓ. Diese Schicht **12**, deckt rückwertig das photovoltaische Modul ab und bildet mit den Kontaktbereichen (**04a, 04b**) die Dichtung. In den Positionen, an denen die Kontaktbereiche **(04a, 04b)** mit der Schicht **12** in Berührung sind, werden die Kontaktbereiche (**04a, 04b**) elektrisch verbunden mit den Elektroden (**03a, 03b**)**.** In den übrigen Bereichen, bildet die Schicht **12** die Isolatorbereiche der Dichtung. So ist der elektrischen Kontaktbereich **04a** über die Schicht **12** elektrisch mit der Elektrode **03a,** die zur Sauerstoffproduktion ausgebildet ist, verbunden, wodurch die Elektrode **03a** als Anode gepolt ist. Der elektrische Kontaktbereich **04a** ist zur Herstellung der elektrischen Verbindung, über die Dicke der Dreifach-Solarzelle **S** gestreckt. Diese Ausformung des Kontakts ist ohne Mehraufwand, fertigungsbedingt durch die Superstrat-Konfiguration gegeben. Der Rückkontakt der Dreifach-Solarzelle **S** ist elektrisch mit der Schicht **12** verbunden über den elektrischen Kontaktbereich **04b** und mit der Elektrode **03b,** die zur Wasserstoffproduktion ausgebildet ist, wodurch die Elektrode **03b** als Kathode gepolt ist.

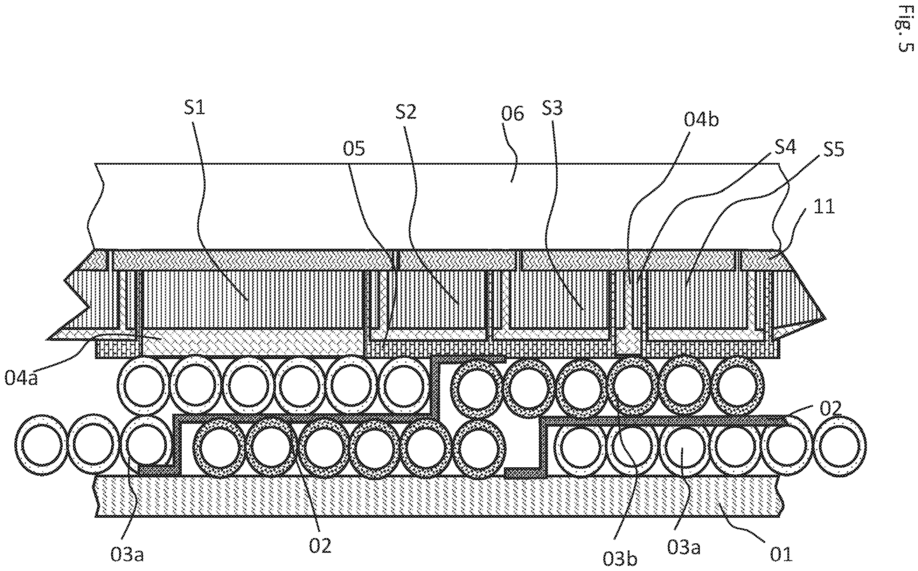

Die Fig. 5 zeigt schematisch einen Querschnitt eines Ausschnitts eines fünften Ausführungsbeispiels einer erfindungsgemäßen Photovoltaik- Elektrolyse-Einheit (PE-Einheit).

Die Ausführung des photovoltaischen Moduls und der Dichtung dieses Ausführungsbeispiels ist weitest gehend identisch mit dem des zweiten Ausführungsbeispiels. Gegenüber dem zweiten Ausführungsbeispiel sind hier die Kontaktbereiche **(04a, 04b)** so ausgebildet, dass sie den metallischen Kontakt **07a** (Fig. 2) bzw. Rückkontakt **07b** (Fig. 2) der Solarzellen (**S1**, **S2, S3**) ersetzen. Die Ausführungen gemäß der übrigen Komponenten betreffend das zweite Ausführungsbeispiel gelten davon unberührt für das fünfte Ausführungsbeispiel mit.

Die Ausführung der Komponenten der Elektrolyseurzelle, Elektroden (**03a, 03b**) und Separatoren **02,** unterscheidet sich von denen der Ausführungsbeispiele eins bis vier durch die Ausformung des für Flüssigkeiten permeablen Material der Elektroden (**03a, 03b**), das hier aus Nickelröhrchen ausgebildet ist. Die Beschichtung mit Katalysatoren bleibt identisch zum ersten Ausführungsbeispiel.

## Patentansprüche

1. Photovoltaik-Elektrolyse-Einheit mindestens aufweisend zwei integrierte Photovoltaik-Elektrolysemodule und ein Gehäuse (01) mit mindestens vier Öffnungen für den Durchtritt von Gasen und Elektrolyten, wobei ein Photovoltaik-Elektrolysemodul mindestens aufweist,
• eine Elektrolyseurzelle, mindestens aufweisend
• einen Elektrolyten,
• einen ionenleitenden Separator (02),
• zwei flächige, für Flüssigkeiten permeable Elektroden (03a, 03b) zur unterschiedlichen Polung, wobei eine erste Elektrode (03a, 03b) ein erstes Katalysatormaterial aufweist und eine zweite Elektrode (03a, 03b) ein zweites Katalysatormaterial und wobei die Elektroden (03a, 03b) in einer ersten Richtung beabstandet nebeneinander angeordnet sind und
• ein photovoltaisches Modul, mindestens aufweisend
- ein lichtdurchlässiges Substrat (06),
- mindestens eine Solarzelle (S, S1, S2, S3), mit mindestens jeweils einem Minuspol und einem Pluspol, wobei ein Minuspol über einen ersten elektrischen Kontaktbereich (04a, 04b) mit der ersten Elektrode (03a, 03b) und ein Pluspol über einen zweiten elektrischen Kontaktbereich (04a, 04b) mit der zweiten Elektrode (03a, 03b) elektrisch verbunden ist und wobei eine Verschaltung der Elektroden (03a, 03b) und der Solarzellen (S, S1, S2, S3) in Serie erfolgt und
• eine Dichtung, mindestens aufweisend die elektrischen Kontaktbereiche (04a, 04b) und mindestens einen Isolatorbereich (05) im Verbund und wobei die Dichtung angeordnet ist als Abschluss der Elektrolyseurzelle gegenüber dem photovoltaischen Modul;
**und wobei** in der Photovoltaik- Elektrolyse-Einheit die Photovoltaik-Elektrolysemodule so angeordnet sind, dass sich in der ersten Richtung eine Polung der Elektroden (03a, 03b) benachbarter Module abwechselt und die Elektroden (03a, 03b) wenigstens abschnittsweise derart ausgebildet sind, dass in der ersten Richtung direkt benachbart zueinander angeordnete Elektroden (03a, 03b) durch Formschluss über den ionenleitenden sowie die Elektroden trennenden Separator (02) mechanisch miteinander in Kontakt sind, so dass diese teilweise überlappende Bereiche aufweisen und wobei der Separator (02) in Abschluss mit dem mindestens einen Isolatorbereich und dem Gehäuse (01) Kammern für die Gasproduktion bilden und wobei vermittels einer zum Gehäuse (01) gehörenden, parallel zu den Elektroden angeordneten Gehäusewand auf die überlappenden Bereiche der Elektroden (03a, 03b) und Separatoren (02) ein Anpressdruck ausübbar ist.

2. Photovoltaik-Elektrolyse-Einheit nach Anspruch 1,
**dadurch gekennzeichnet, dass**
in der Photovoltaik-Elektrolyse-Einheit mindestens abschnittsweise die flächigen, für Flüssigkeiten permeablen Elektroden (03a, 03b) als wechselseitige Stufenfalzen ausgebildet sind.

3. Photovoltaik-Elektrolyse-Einheit nach Anspruch 1,
**dadurch gekennzeichnet, dass**
in der Photovoltaik-Elektrolyse-Einheit mindestens abschnittsweise die flächigen, für Flüssigkeiten permeablen Elektroden (03a, 03b) einer Polung mit Stufenfalzen ausgebildet sind.

4. Photovoltaik-Elektrolyse-Einheit nach einem der Ansprüche 1 bis 3,
**dadurch gekennzeichnet, dass**
die flächigen, für Flüssigkeiten permeablen Elektroden (03a, 03b) und die Separatoren (02) sich entlang einer zweiten Richtung senkrecht zur ersten Richtung erstrecken und wobei sich die Anordnung von Photovoltaik-Elektrolysemodulen der ersten Richtung in der zweiten Richtung wiederholt, so dass entlang der zweiten Richtung gestreckte Kammern für die Gasproduktion gebildet sind.

5. Photovoltaik-Elektrolyse-Einheit nach einem der vorhergehenden Ansprüche,
**dadurch gekennzeichnet, dass**
das photovoltaische Modul eine Tandem-Solarzelle (S) aufweist, wobei ein Pol der Tandem-Solarzelle aus einer transparenten, leitfähigen Schicht gebildet ist.

6. Photovoltaik-Elektrolyse-Einheit nach einem der Ansprüche 1 bis 5,
**dadurch gekennzeichnet, dass**
das photovoltaische Modul eine Dreifach-Solarzelle (S) aufweist und wobei mindestens ein Pol der Dreifach-Solarzelle aus einer transparenten, leitfähigen Schicht gebildet ist.

7. Photovoltaik-Elektrolyse-Einheit nach einem der Ansprüche 1 bis 4,
**dadurch gekennzeichnet, dass**
das photovoltaische Modul mindestens drei c-Si Solarzellen (S1, S2, S3) aufweist.

8. Photovoltaik-Elektrolyse-Einheit nach einem der Anspüche 1 bis 4,
**dadurch gekennzeichnet, dass**
das photovoltaische Modul drei a-Si:H/c-Si Heterokontakt-Solarzellen (S1, S2, S3) aufweist.

9. Photovoltaik-Elektrolyse-Einheit nach einem der Ansprüche 1 bis 4,
**dadurch gekennzeichnet, dass**
das photovoltaische Modul drei Dünnschicht CdTe-Solarzellen (S1, S2, S3) aufweist.

10. Photovoltaik-Elektrolyse-Einheit nach einem der vorhergehenden Ansprüche,
**dadurch gekennzeichnet, dass**
die Elektroden (03a, 03b) auf der Basis von Nickelschaumstreifen gebildet sind.

11. Photovoltaik-Elektrolyse-Einheit nach einem der vorhergehenden Ansprüche,
**dadurch gekennzeichnet, dass**
der Separator (02) aus sulfoniertem Tetrafluorethylen-Polymer gebildet ist.

## Claims

1. Photovoltaic electrolysis unit having at least two integrated photovoltaic electrolysis modules and a housing (01), with at least four openings for the passage of gases and electrolytes, wherein a photovoltaic electrolysis module at least comprises,
• an electrolyser cell, comprising at least
• an electrolyte
• an ion-conducting separator (02),
• two flat electrodes (03a, 03b) of different polarity, permeable to liquids, wherein a first electrode (03a, 03b) comprises a first catalyst material, and a second electrode (03a, 03b) comprises a second catalyst material, and wherein the electrodes (03a, 03b) are arranged side-by-side, spaced apart in a first direction, and
• a photovoltaic module, comprising at least
- a transparent substrate (06),
- at least one solar cell (S, S1, S2, S3), in each case with at least one negative pole and one positive pole, wherein a negative pole is electrically connected to the first electrode (03a, 03b) via a first electrical contact region (04a, 04b), and a positive pole is electrically connected to the second electrode (03a, 03b) via a second electrical contact region (04a, 04b), and wherein the electrodes (03a, 03b) and the solar cells (S, S1, S2, S3) are connected in series, and
• a seal, comprising at least the electrical contact regions (04a, 04b) and at least one insulator region (05) in composite form, and wherein the seal is arranged as a closure of the electrolyser cell with respect to the photovoltaic module,
**and wherein** in the photovoltaic electrolysis unit the photovoltaic electrolysis modules are arranged such that a polarity of the electrodes (03a, 03b) of adjacent modules alternates in the first direction, and the electrodes (03a, 03b) are, at least in sections, formed such that electrodes (03a, 03b), arranged directly adjacent to one another in the first direction are mechanically tight fit connected via the separator (02), which conducts ions and separates the electrodes, so that the electrodes (03a, 03b) show partially overlapping regions, and wherein the separator (02), joined with the at least one insulator region and the housing (01), forms chambers for gas production, and wherein a contact pressure can be exerted on the overlapping regions of the electrodes (03a, 03b) and separators (02), via a housing wall belonging to the housing (01) and arranged parallel to the electrodes (03a, 03b).

2. Photovoltaic electrolysis unit according to Claim 1,
**characterised in that**,
in the photovoltaic electrolysis unit, at least in sections, the flat electrodes (03a, 03b), permeable to liquids, are designed as reciprocal shiplaps.

3. Photovoltaic electrolysis unit according to Claim 1,
**characterised in that**,
in the photovoltaic electrolysis unit, at least in sections, the flat electrodes (03a, 03b) of one polarity, permeable to liquids, are designed with shiplaps.

4. Photovoltaic electrolysis unit according to one of the Claims 1 to 3,
**characterised in that**,
the flat electrodes (03a, 03b), permeable to liquids, and the separators, (02) extend along a second direction at right angles to the first direction, and wherein the arrangement of photovoltaic electrolysis modules of the first direction is repeated in the second direction, so that extended chambers for gas production are formed along the second direction.

5. Photovoltaic electrolysis unit according to one of the preceding claims,
**characterised in that**,
the photovoltaic module comprises a tandem solar cell (S), wherein one pole of the tandem solar cell is formed by a transparent conductive layer.

6. Photovoltaic electrolysis unit according to one of the Claims 1 to 5,
**characterised in that**,
the photovoltaic module comprises a triple-junction solar cell (S), and wherein at least one pole of the triple-junction solar cell is formed by a transparent conductive layer.

7. Photovoltaic electrolysis unit according to one of the Claims 1 to 4,
**characterised in that**,
the photovoltaic module comprises at least three c-Si solar cells (S1, S2, S3).

8. Photovoltaic electrolysis unit according to one of the Claims 1 to 4,
**characterised in that**,
the photovoltaic module comprises three a-Si:H/c-Si heterocontact solar cells (S1, S2, S3).

9. Photovoltaic electrolysis unit according to one of the Claims 1 to 4,
**characterised in that**,
the photovoltaic module comprises three thin-film CdTe solar cells (S1, S2, S3).

10. Photovoltaic electrolysis unit according to one of the preceding claims,
**characterised in that**,
the electrodes (03a, 03b) are formed on the basis of nickel foam strips.

11. Photovoltaic electrolysis unit according to one of the preceding claims,
**characterised in that**,
the separator (02) is formed from sulphonated tetrafluoroethylene polymer.

## Revendications

1. Unité d'électrolyse photovoltaïque comportant au moins deux modules d'électrolyse photovoltaïques intégrés et un boîtier (01) avec au moins quatre ouvertures pour le passage de gaz et d'électrolytes, sachant qu'un module d'électrolyse photovoltaïque comporte au moins,
• une cellule initiale d'électrolyse, comportant au moins
• un électrolyte,
• un séparateur conducteur d'ions (02),
• deux électrodes plates perméables aux liquides (03a, 03b) pour la polarité différente, sachant qu'une première électrode (03a, 03b) comporte un premier matériau de catalyseur et une deuxième électrode (03a, 03b), un deuxième matériau de catalyseur et sachant que les électrodes (03a, 03b) sont disposées à distance les unes à côté des autres dans une première direction et
• un module photovoltaïque comportant au moins
- un substrat transparent (06),
- au moins une cellule solaire (S, S1, S2, S3) avec au moins respectivement un pôle négatif et un pôle positif, sachant qu'un pôle négatif est relié électriquement par une première zone de contact électrique (04a, 04b) à la première électrode (03a, 03b) et un pôle positif est relié à la deuxième électrode (03a, 03b) par une deuxième zone de contact électrique (04a, 04b) et sachant qu'une interconnexion des électrodes (03a, 03b) et des cellules solaires (S, S1, S2, S3) a lieu en série et
• un joint d'étanchéité comportant au moins les zones de contact électriques (04a, 04b) et au moins une zone d'isolateur (05) en combinaison et sachant que le joint d'étanchéité est disposé en tant que fermeture de la cellule initiale d'électrolyse vis-à-vis du module photovoltaïque
**et sachant que** dans l'unité d'électrolyse photovoltaïque, les modules d'électrolyse photovoltaïques sont disposés de telle manière qu'une polarité des électrodes (03a, 03b) des modules voisins est alternée dans la première direction et les électrodes (03a, 03b) sont constituées au moins en partie de telle sorte que dans la première direction, les électrodes (03a, 03b) disposées directement adjacentes l'une par rapport à l'autre dans la première direction sont mécaniquement en contact l'une avec l'autre par conformité de forme par le biais du séparateur (02) conducteur d'ions et séparant les électrodes de sorte que celles-ci comportent des zones se chevauchant en partie et sachant que le séparateur (02) avec au moins une zone d'isolateur et le boîtier (01) forment finalement des chambres pour la production de gaz et sachant qu'au moyen d'une paroi de boîtier appartenant au boîtier (01), disposée parallèlement aux électrodes, une pression d'application peut être exercée sur les zones se chevauchant des électrodes (03a, 03b) et des séparateurs (02).

2. Unité d'électrolyse photovoltaïque selon la revendication 1,
**caractérisée en ce que**
les électrodes plates perméables aux liquides (03a, 03b) sont constituées au moins en partie dans l'unité d'électrolyse photovoltaïque sous la forme de feuillures réciproques..

3. Unité d'électrolyse photovoltaïque selon la revendication 1,
**caractérisée en ce que**
les électrodes plates perméables aux liquides (03a, 03b) d'une polarité sont constituées avec des feuillures réciproques au moins en partie dans l'unité d'électrolyse photovoltaïque.

4. Unité d'électrolyse photovoltaïque selon l'une quelconque des revendications 1 à 3
**caractérisée en ce que**
les électrodes plates, perméables aux liquides (03a, 03b) et les séparateurs (02) s'étendent le long d'une deuxième direction perpendiculairement à la première direction et sachant que le système de modules d'électrolyse photovoltaïques de la première direction se répète dans la deuxième direction de telle manière que des chambres étendues le long de la deuxième direction sont formées pour la production de gaz.

5. Unité d'électrolyse photovoltaïque selon l'une quelconque des revendications précédentes,
**caractérisée en ce que**
le module photovoltaïque comporte une cellule solaire tandem (S), sachant qu'un pôle de la cellule solaire tandem est formée d'une couche transparente conductrice.

6. Unité d'électrolyse photovoltaïque selon l'une quelconque des revendications 1 à 5,
**caractérisée en ce que**
le module photovoltaïque comporte une cellule solaire triple (S) et sachant qu'au moins un pôle de la cellule solaire triple est formé d'une couche transparente conductrice.

7. Unité d'électrolyse photovoltaïque selon l'une quelconque des revendications 1 à 4,
**caractérisée en ce que**
le module photovoltaïque comporte au moins trois cellules solaires c-Si (S1, S2, S3).

8. Unité d'électrolyse photovoltaïque selon l'une quelconque des revendications 1 à 4,
**caractérisée en ce que**
le module photovoltaïque comporte trois cellules solaires a-Si:H/c-Si à hétérojonction (S1, S2, S3).

9. Unité d'électrolyse photovoltaïque selon l'une quelconque des revendications 1 à 4,
**caractérisée en ce que**
le module photovoltaïque comporte trois cellules solaires CdTe à couche mince (S1, S2, S3).

10. Unité d'électrolyse photovoltaïque selon l'une quelconque des revendications précédentes,
**caractérisée en ce que**
les électrodes (03a, 03b) sont formées sur la base de bandes de mousse au nickel.

11. Unité d'électrolyse photovoltaïque selon l'une quelconque des revendications précédentes,
**caractérisée en ce que**
le séparateur (02) est formé de polymère de tétrafluoréthylène sulfoné.
